# EUROPEAN PATENT APPLICATION

(11) **EP 4 579 571 A1**
(43) Date of publication of application: **02.07.2025**
(21) Application number: 23220812.4
(22) Date of filing: 29.12.2023
(51) Int. Cl.: G06Q 50/06, G06F 16/29

(54) **METHOD FOR THE AUTOMATED ESTIMATION OF PIPE ATTRIBUTES OF A FLUID DISTRIBUTION NETWORK**

(71) Applicant: Kamstrup A/S, 8660 Skanderborg (DK)
(72) Inventor: Brejning, Nanna Søs, 8660 Skanderborg (DK)
(74) Representative: Plougmann Vingtoft a/s

(57) **Abstract**

Databases are used by utility companies for holding information about pipes and structures in fluid distribution networks. The databases contain information attributed to the pipes such as pipe length, pipe geo position, pipe diameter or year of burial in the ground. However, in some cases the information attributes are missing or faulty and this lack of information causes problems when deciding which pipes in a heat distribution network are to be replaced first. The invention solves this problem by teaching a method of an automated and computer implemented estimation of a pipe attribute in a fluid distribution network, said method including retrieving a data set comprising the addresses of customers and retrieving a building register data set comprising the addresses of buildings. The method comprises the further step of processing the retrieved data by using geospatial polygons and then assigning to the nearest service pipe an attribute from one or both data sets. The geospatial polygon created around a pipe extends the attribute from the pipe to the whole area of the polygon. Candidate attributes are then identified from the attributes held by a plurality of geospatial polygons, and a most likely attribute is selected and assigned to become a final attribute of a main pipe.

## Description

### Field of the Invention

The invention relates to the field of pipe networks used for the transport and distribution of fluids such as water, gas and sewage. In particular, the invention concerns the field of district heating by means of a fluid transported through a distribution pipe network. Databases storing information about the network hold information about the pipes. A pipe attribute is, for example, the year a pipe was buried in the ground by the utility company and the invention concerns a method of estimating missing attributes.

### Background of the Invention

Pipe networks comprise main pipes and service pipes and utility companies hold databases with information about the age, location and dimensions of the pipes. Many utility companies have made digital twins of their pipe network and use the digital overview for monitoring actual status of the network and for making decisions on maintenance operations. Especially for deciding when maintenance has to be done, e.g. replacing pipes, it is important to know the age of the pipes. Exactly this information is frequently a missing attribute of the pipe in databases. While there may be information about the location of the pipe, there is no information about when it was buried in the ground or when a service pipe was connected to a main pipe or when a pipe was replaced. A decision about maintenance and where to start replacing old pipes is likely to be more correct when it is based on better data. "Service pipes" are to be understood as the pipes connecting a main pipe to a residential house, whereas "main pipe" is the pipe connected to the heating works.

A further reason for having up to date information about one's pipe network resides in the financial value of the network. For reasons of tax and yearly company reporting a value of the pipe network must be calculated by the utility company and in some jurisdictions the value of a pipe is set to zero if the age of the pipe is unknown. This is unsatisfactory and an automated estimation of pipe age or the year it was buried in the ground is to be preferred. It may not be the exact correct year but at least a better indication than a missing attribute.

### Technical problem to be solved

The invention sets out to solve the problem of missing pipe attributes in pipe network data bases in particular but not only in the field of heat distribution networks.

### Description of the Invention

The method according to the invention suggests an automated estimation of the missing pipe attribute by importing into a computer program data attributes relating to pipes and combining these data with data attributes unrelated to pipes and then, with these combined attributes, to use geospatial polygons to transfer attributes from other pipes or from pipes-unrelated data to pipes missing the attribute. More precisely, the automated estimation of a pipe attribute of a pipe in a fluid distribution network which supplies customers includes retrieving a data set comprising an address of customers connected to the network (FOF) and retrieving a data set comprising the geographical location of the pipes and processing the retrieved data by using geospatial polygons, the method incorporating the following steps:
A) Assigning to the nearest service pipe attributes from one or both data sets, such as a year attribute
B) creating a geospatial polygon around each pipe which has an attribute hereby extending the attribute(s) from the pipe to the area of the polygon
C) identifying as attribute candidates the attributes from a plurality of geospatial polygons, and
D) selecting from the attribute candidates the most likely attribute and assign this most likely attribute to be the attribute of a pipe.

As already described, having high quality and correct data gives a better evaluation of the financial value of a pipe network and also makes decision making easier about initiating costly maintenance or not. The invention enables the establishment of improved pipe network databases by using information already at hand, namely registers about heat works' customers and information from public databases. The improvement is automated and hence makes possible what would normally not be possible without much manual work: middle sized heat distribution networks have 15.000 to 20.000 customers and 3.000 kilometers of pipes created by 15.000 service pipes and more than 50.000 main pipes. Geospatial polygons are a good way to cover large pipe network areas fast.

The invention takes its offset with the intention to use good data to improve low quality data or even missing data. The Applicant realized that one particular data set held by the utility companies were nearly always 100% up to date. This data set is the register of customers (Customer data set also called FOF) holding their billing addresses. A further information found in the Customer data set is often the year of the address having connected to the distribution network. The attributes in the Customer data set are in the method of the invention assigned to the service pipes before estimating the attributes of the main pipes and this order of estimation gives a better result than starting with the main pipes. Starting with the service pipes gives a better data foundation which leads to more correct main pipe attributes.

The dataset comprising an address of customers further comprises an attribute with information about when a customer has been connected to the fluid distribution network. This information is of particular value and is taken from the Customer data set which often holds this information of year.

The method includes retrieving a further data set comprising building register information (BBR) comprising attributes such as an address of a building and the year the building was built. Including this data set in the inventive method has a particular value as validation information. In situations where the attribute from the Building register data set and from the Customer data set disagree the Building register information can assist in making the final decision.

The assignment of the most likely attribute as the attribute to the main pipe is done if at least a part of a main pipe representation is contained in a pipe polygon and if the polygon contains the longest main pipe representation or, where two or more polygons have the same attribute, they in summation contain the longest main pipe representation compared to service polygons with different attributes. This has proved to be a good way of selecting the best attribute from the proposed ones.

Preferably the attributes in the data sets are one or more of the following: year of pipe burial, pipe identification number, diameter of a pipe, year of house being built, year a customer was connected to the fluid distribution network.

The selection from the attribute candidates to find the most likely attribute includes a an evaluation procedure where each attribute candidate is compared to a first criterion, and if the attribute candidate does not fulfill the first criterion, to compare the attribute candidate with at least a second criterion. If the attribute candidate fulfills the first or second criteria to assign this attribute candidate as the most likely attribute to the service or main pipe. Such an evaluation procedure has improved the estimation of the attributes.

The evaluation procedure preferably contain at least some of the following criteria:
- If the main pipe is geographically close to a utility works then select an attribute candidate year as the attribute of a pipe that is older than pipes remote from the main pipe
- If the year the house was built is 10 years or more later than the year the customer was connected to the fluid distribution network then select the year the house was built as the attribute of the pipe
- If the difference between the attribute containing customer's connection year to the fluid distribution network and the attribute containing the estimated year of burial of the main pipe is more than 25 years then select the attribute year of burial of the main pipe as the attribute of the pipe
and if none of these criteria are fulfilled then select the attribute from the Customer data set with information about the year the customer was connected to the fluid distribution network.

In one embodiment of the invention a geospatial polygon is drawn around a service pipe. The polygon should have a distance (d) from a line representing the service pipe to the outline of the polygon which distance is between 5 meters and 100 meters, preferably between 20 meters and 40 meters.

In another embodiment of the invention geospatial polygons are created according to a Voronoi procedure. The polygons are centered around geopoints from the data set comprising the address of customers (FOF) and where neighbouring polygons are merged if they hold identical attributes, such as an identical year a customer was connected to the fluid distribution network.

Advantageously, further geospatial polygons are created according to a Voronoi procedure and centered around geopoints from the data set in the Building register (BBR)- This register comprises the address of buildings and where neighbouring polygons are merged if they hold identical attributes, such as an identical year a building was constructed.

Even further geospatial polygons are created according to a Voronoi procedure and centered around geopoints from the pipes data set comprising information about the geographical location of the pipes. Neighbouring polygons are merged if they hold identical attributes, such as an identical year when a pipe was buried.

When using data from the pipes data the pipe representations in the are converted into geopoints, for example into a Universal Transverse Mercator (UTM) format, with a predetermined geographical distance inbetween the geopoints, such as between 1 to 10 meters, and preferredly 3 meters between two geopoints.

In a further advantageous development of the invention also the diameter of a pipe can be estimated. Such an attribute is often missing in the data of the utility works. The diameter of the main pipe is determined by a table look up, where the table contains the attribute representing the year that main pipes were buried in the ground of the fluid distribution network, the number of customers that the pipe is connected to, and the diameter of said main pipe. The method further comprises the step of selecting the diameter attribute from a main pipe with the the same year of burial, and then assigning this selected diameter attribute as the diameter of the main pipe. Preferably, the diameter of the main pipe is determined by identifying the number of consumers in the fluid distribution network and from this number estimate the diameter of the main pipe.

The inventive method can be used in different types of fluid distribution networks, such as a heating fluid distribution network, a water distribution network or a sewage distribution network.

### Description of the Drawings

In the following embodiments of the invention will be described with reference to the following figures:
Figure 1 shows a residential area with a heat distribution network
Figure 2 is a simplified 2D representation of Figure 1
Figure 3 is a flow chart of the steps in a first embodiment of the invention
Figure 4 shows the use of geospatial polygons in the first inventive embodiment
Figure 5 shows Voronoi polygons used in a second embodiment of the invention
Figure 6 shows Voronoi polygons in a final step of the second embodiment
Figure 7 is a flow chart of the steps in the second embodiment of the invention

### Detailed description of the invention

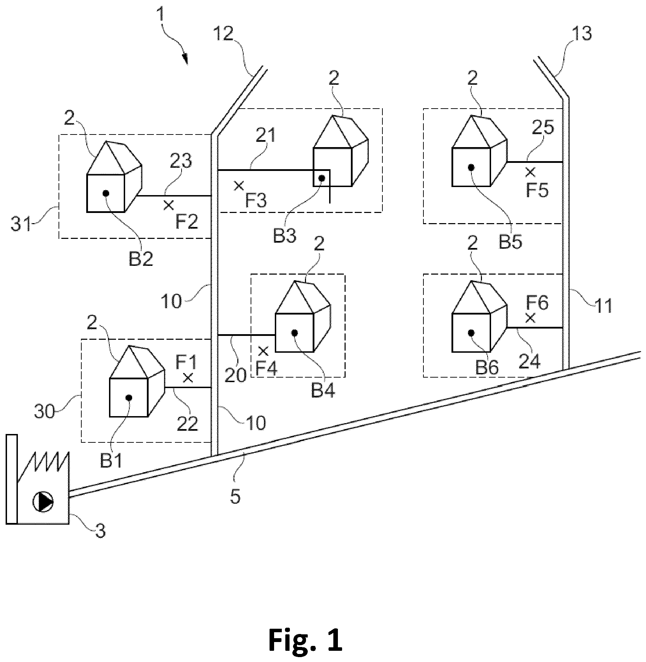

Figure 1 is a drawing of a residential living area with houses 2 supplied with heat from a district heating works 3. A heat distribution network 1 consists of a system of pipes connected to the heating works which supplies a fluid heating medium to the heat distribution network through a large main pipe 5 which branches off into main pipes 10, 11, 12 and 13. From the main pipes further pipes are branched off, namely service pipes 20,21, 22, 23, 24 and 25. Typically the main pipe has a larger diameter than the service pipe.

For the sake of simplicity each pipe is drawn as a single line but in reality a heat distribution network has one pipe delivering heating fluid from the heating works and one return pipe for guiding the heat depleted fluid back to the heating works. Thus, the main pipe 10 either consists of two single pipes placed side by side buried in the ground, or the main pipe could be two pipes side by side surrounded by a commonly shared isolation layer which has an outer protective shell, a socalled twin type pipe. The pipes described and used in the invention are conventional heat distribution pipes.

The service pipe 22 in Figure 1 is at one end connected to the main pipe 10 and at the other end connected to the internal heating system of residential house 2. Such a service pipe has a typical length of between 10 and 50 meters and is made in metal or more frequently in a plastics material, such as PEX. The service pipe is described by several attributes, such as pipe identification name (pipe ID), length, internal diameter of the pipe, external diameter of the pipe, material type, thickness of the wall of the pipe, heat loss coefficient, isolation thickness, year of manufacturing and year of installation, i.e the year the service pipe was connected to the main pipe which is typically also the year the consumer was registered as customer in the database. A further data attribute of the service pipe is its physical location, which is often given in UTM (Universal Transverse Mercator) coordinates.

Main pipes typically come in sections of 20 - 25 meters length. Thus, main pipe 10 of Figure 1 in reality consists of five main pipe sections connected to each other by welding. As the sections are of the same pipe type the whole of main pipe 10 bears the same attributes along its full length. Thus, in an automated computer calculation main pipe 10 is handled as one long pipe, whereas main pipes 12 and 13 have changed direction and are handled as separate pipes. Main pipes are typically placed underneath the surface of paved roads whereas service pipes follow a less predictable route to the house. The attributes allocated to the main pipes are the same as for the service pipes mentioned above, but do also often include the cost price of the pipe.

The district heating works 3 holds a computer system with a database comprising the attributes of the main pipes and the service pipes which includes the geographical location of a pipe and often, but not always, its year of installation..

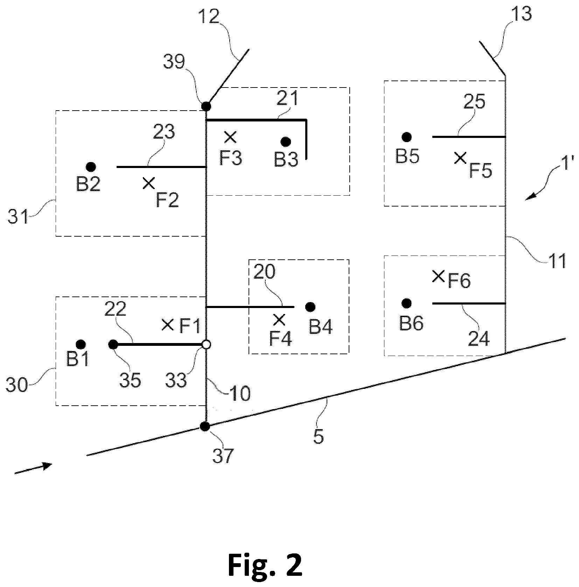

Figure 2 is 2-dimensional schematic view of the residential area 1' of Figure 1 but with the houses removed. The real estate 30 shows that service pipe 22 has a starting location 33 and an end location 35. Correspondingly the main pipe 10 has a starting location 37 and an end location 39 and although it consists of several sections of pipes it is represented in the database as one long pipe. At geopoint 39 pipe main pipe 12 takes another direction than main pipe 10 and therefore the length of pipe 12 is described as the distance between geopoint 39 and a remote point (not visible in the Figure).

The data attributes used for describing the heat distribution network 1' comes from at least three different data sets: a Pipes data set maintained by the district heating works or by other vendors, a Customer data set also maintained by the district heating works, and a Building register data set from the public authorities. In the following the three data set will be described.

The Pipes data set is extracted from the Pipes database and holds information about the pipes and their attributes often including the year the main and service pipes were buried in the ground. A service pipe is in a Pipes data set typically represented as a line and not as geopoints. As will be shown attributes from closest neighbouring locations (i.e. geopoints) will be imported to the service pipe and assigned to the service pipe as its attribute.

The Customer data set (FOF) comes from a database curated by the district heating works and comprises the name of the customer and typically the precise address given by street name, house number and city. Further, this data set holds the year the address became a customer of the district heating works. Typically, this year is the same year or the year after the service pipe has been buried into the ground but the difference between the age of the service pipe and the main pipe can be a couple of years. In real estate 30 of Figure 2, the cross X named F1 indicates the geopoint corresponding to the address given in the customer data set and F1 holds as attribute the year the address became a customer. As the address in the dataset is typically given in alphanumerical it is converted to a geopoint which can be done via internet based apps. Thus, F1 has the following data format: (geopoint, year of becoming customer).

The Building register (BBR) is a database supervised and maintained by the public autorities often named the cadastre. In some jurisdictions such as in Denmark a geopoint is given to each building in a real estate and the geopoint is placed in the middle of the building. B1 in Figure 2 has the following data format: (geopoint, year of building established), i.e. it holds the information about the geographical position of the house 2 and as attribute the year it was built.

As can be seen in real estate box 30 of Figure 2 geopoints F1 and B1 are not placed in the same location but sometimes they are. Because the building is placed relatively far from the street where main pipe 10 runs B1 has in this case a different geopoint than F1.

Practice has shown that the data sets do not hold all information. Often data is missing, i.e. some pipes for example have a year attributed while others do not. However, according to the present invention, the missing attributes can be estimated either from the already existing information in the data sets or from the already existing information in the data sets combined with further information. A central goal is to estimate the year of burial of all the pipes, and especially the year of burial of the main pipes, and this is best achived by first estimating the year the service pipes were established in the customer database, i.e. when they were connected to a main pipe, and then use this information to estimate the year of burial of the main pipe. As realized by the Applicant the Customer data set is normally up to date and typically well curated by the administrative staff of the heat distribution networks because the Customer data set is used for generating the invoices to the customers. The customer data set is therefore well suited as a basis for estimating the year of burial of service and main pipes.

### First embodiment of the invention

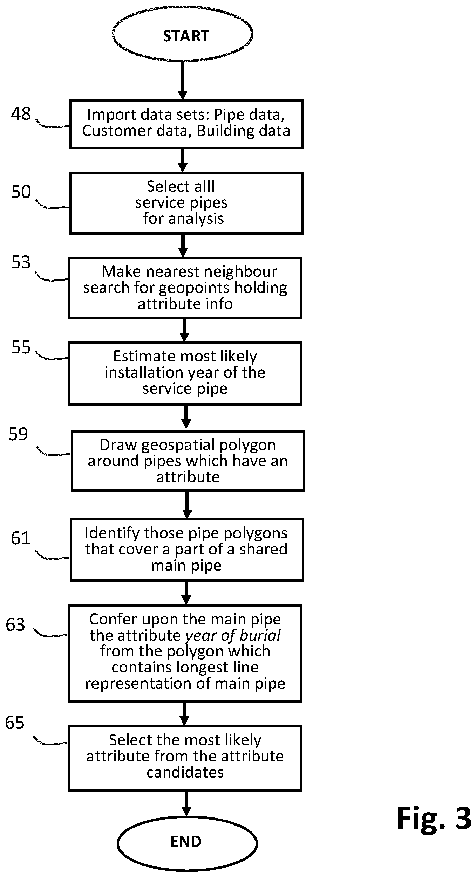

Figure 3 is a flow chart depicting the steps used for the automated estimation of the year of burial of service pipes and main pipes according to a first embodiment of the invention. In a first step 48 the three data sets *Pipes data, Customer data* and *Building register data* are imported to a computer. The computer executes a software programme which is programmed to perform the steps in Figure 3. The software programme can be an integrated part of a heat distribution web based network monitoring platform such as the commercially available "Heat Intelligence^{™}" as manufactured and sold by the Applicant. In step 48 a data harmonization is performed because the address in the Customer data set typically comes as an alphanumeric string whereas the location information in the Building register data is given as a geopoint in UTM format. In general the UTM geopoint data format is the preferred data format throughout the invention and the address of the Customer data set is converted to UTM format so that the location information from all three data sets become comparable as a geopoint in the UTM format.

In step 50 offset is taken from the Pipes data set and all service pipes of the network are selected for analysis. Relating to Figure 2 this means starting with pipes 20, 21, 22, 23, 24 and 25. In the next step 53 a nearest neighbour search is made and the algorithm returns data belonging to the geopoint closest to the service pipe 22. The automated algorithm will select F1 as closest neigbour and assign to service pipe 22 any attributes of F1. In Figure 2 the attribute of geopoint B1 representing the year the building was built would in such a case be assigned to the service pipe 22. In some instances attributes from both nearest neighbours are assigned to the service pipe and then leaving the decision for selecting the most likely attribute to be taken in a later step.

From the data at hand the algorithm estimates in step 55 the most likely year that the service pipe was laid into the ground. It compares the year of becoming a customer from the Customer data set with the year of burial from the Pipes data set. In case the two years match this is a strong indication of having found the correct year. In case there is no year given in the pipes data set the year from the customer data set is assigned to the Pipes data set, hereby filling out a gap in the data. In a situation where the year from the Customer data set and the year from the Pipes data set do not match the year from the Building register data set is taken into consideration. In Figure 2 that is geopoint B1 which holds location data and the year the house was built.

All service pipes of the heat distribution network 1 are now analysed and assigned a year of burial as attribute, if possible. Each service pipe has been subjected to the analysis in steps 50, 53 and 55. At this point in the algorithm all service pipes holds an estimation or a preknown value of the burial year - the next step 59 in the invention is to draw a geospatial polygon around the pipes holding an estimated or preknown value of the year of burial.

While the steps 48 to 55 is about creating the best possible data set for use when later estimating the main pipe attribute, the steps 59 to 65 concern in particular the estimation of the year of burial of the main pipes. The Applicant has found that the best result is achieved if this estimation takes its offset in the improved data set of the service pipes obtained as described in steps 48 to 55.

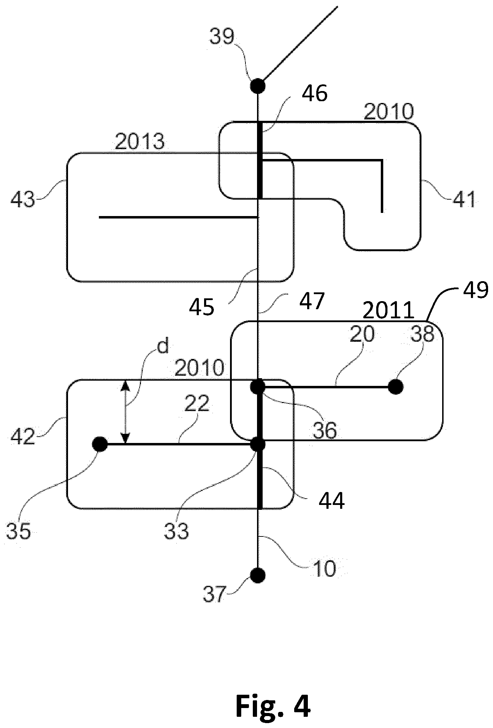

In step 59 of Figure 3 a geospatial polygon is drawn like a buffer around the service pipes which have the attribute year of burial. Figure 4 is a further simplification of Figure 2 and exemplifies step 59 with geospatial polygon 42. The polygon is drawn around service pipe 22 or, more precisely, around a line connecting the geopoints 33 and 35, and hereby all the attributes of the service pipe including its year of burial are extended to the area of the polygon. This means that each geopoint inside the area of the polygon holds exactly the same attributes. The polygon has a distance d from the service pipe 22 to the delimiting line of the polygon, and the distance must be chosen appropriately, for example as half the distance between two service pipes. Preferably the distance d is the same for all polygons but can in some cases as shown with polygon 41 be different from the other polygons. In general the polygones drawn around the service pipes have the service pipes in full length at their center and the outline of the polygons is essentially equidistant from the line representing the service pipe. The polygon is closed i.e. fully enclosing the service pipe and any bends the service pipe may have.

Turning now to step 61 of Figure 3, the polygons that cover a main pipe must be identified with the intention in step 63 to confer attributes from the polygons to the main pipe. In particular only those polygons are used for the estimation of an attribute which cover more or less of a shared main pipe, i.e. the polygons must cover at least a part of the same main pipe. As shown in Figure 4 four geospatial polygons 41, 42, 43 and 47 have been created and they are partially extending over the main pipe 10, i.e. each of the polygons has an area that cover at least a part of the main pipe 10. This means that at the end of step 61 attribute candidates from the plurality of geospatial polygons 41, 42, 43 and 47 have been identified and are now ready for being selected in the automated selection procedure as most likely attribute of the main pipe.

In step 63 the attribute year of burial from the service pipe polygons are suggested as attribute candidates to the main pipe and an evaluation and selection procedure is performed before assigning the most likely attribute to the main pipe. The attribute year of burial of the service pipes are thus presented in the evaluation procedure as candidates, also called geo alternatives, for becoming the finally estimated burial year of the main pipe. However, also here conflicting proposals can be presented to the algorithm. In the case where the main pipe 10 of Figure 4 already holds an attribute year of burial this year can be compared to the years suggested by the service polygon attributes and/or it can be compared to auxiliary decision criteria which will be explained later. In case the main pipe 10 does not hold a year attribute the algorithm will select the year attribute to be that year which belongs to those service pipe polygons that share the same year candidate and which in sum contain the longest line representation of the main pipe 10. This is exemplified in Figure 4 where a main pipe length 44 is covered by the service pipe polygon 42 which as attribute candidate offers the year 2010. Likewise polygon 43 offers the year 2013, and polygon 41 the year 2010 as candidate. The algorithm will now choose the year 2010 as the year when main pipe 10 was buried because the line representation of main pipe 10 is more contained in polygons holding the year 2010 than in polygons holding the year 2013. The summed length of 44 and 46 is longer than the length of pipe representation 45 inside polygon 43. Note, that there are sections 47 of the main pipe which has not been allocated an attribute year but the algorithm nonetheless in step 65 confers the estimated year of burial as most likely attribute upon the full length of the main pipe 10.

In the last step 65 of Figure 3 an evaluation procedure is performed on the results generated by the use of geospatial analysis on the distribution network. This last evaluation so to speak qualifies the estimation of the attribute candidate that the geospatial analysis has given and the end output from the evaluation will be the final attribute assigned to the main pipe, i.e. the most likely attribute such as the most likely year of burial. The evaluation procedure of step 65 is important because the original data quality as imported in step 48 can be very low or even no data existing at all. For example the Pipes data set may in some cases not hold any year attribute at all. Or the Customer data set can be erroneous because the district heating works at some point in time have gotten a new software for managing the users of the network but the old data were not imported to the new software which was only given dummy values in the data fields. An automated procedure of evaluating whether the data are dummies is implemented and if yes, to filter them out or to avoid their use for the year of main pipe estimation. The rules applied in the procedure 65 comprises a detailed evaluation of the data. For example, if the Building register data gives the building year 1970 and the Customer data the installation year 1985 then the Building register data should not play a large role, and will typically be discarded. The rules applied are dependent on the data quality of the data sets imported.

### Second embodiment of the invention

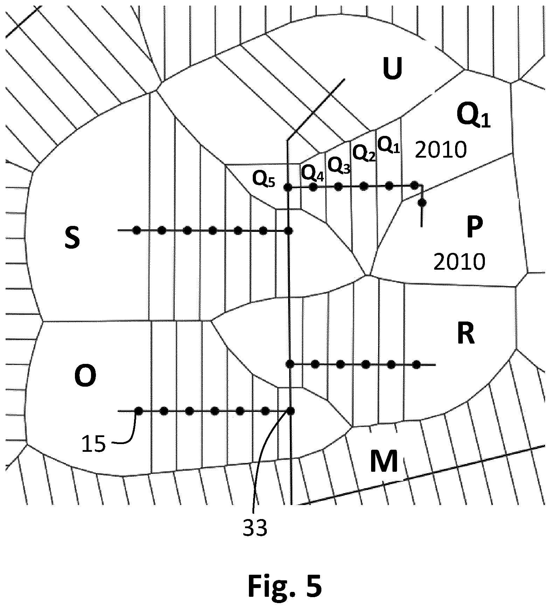

The second embodiment of the invention is explained by Figures 5, 6 and 7 and concerns the use of geospatial polygons called Voronoi polygons. Compared to the first embodiment where not all areas of the heat distribution network are covered by polygons, the use of Voronoi polygons cover all areas and pipes. This has the advantage that there are no pipe sections left without an assigned year attribute.

The mapping technique of Voronoi polygons is a special variant of the nearest neighbour principle in that it enables a fast implementation of the nearest neighbour principle. Just like the classic triangulation allows the calculation of angles placed remotely from the original starting point, so a "polygonalization" of a feature or an attribute in one point can with relatively low computer power be assigned to areas remote from the starting point. The basic idea of Voronoi polygons, sometimes also called Thiessen polygons, is that a polygon is created around a point, and if two polygons are neighbours and respectively hold identical attributes then the two polygons are merged into one larger polygon. This merger is repeated again and again for all polygons until no further mergers are possible.

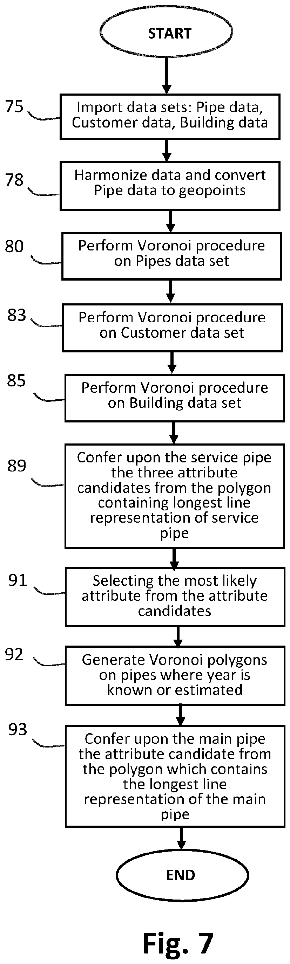

The steps of using Voronoi polygons on a heat distribution network are shown in Figure 7. In a first step 75 the data types across the three data sets are harmonised to be comensurable. Typically, the Pipes data set comes as a line geometry. In a next step 78 data are harmonized by converting the line string of the Pipes data into geopoints, i.e. the same data type as the Building register data and the Customer data. The pipe representations are split into a multiple number of geopoints 15 (Figure 5) such as a geopoint for every three meter.

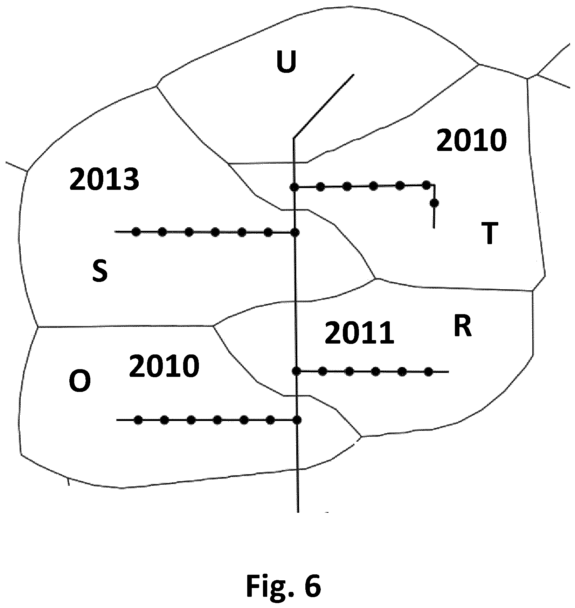

In a third step 80 only the data from the Pipes data set are imported and a geospatial polygon of the type Voronoi is drawn around each geopoint which creates a large number of polygons M, O, R, S, P, Q and U as shown in Figure 5. Thus Figure 5 shows an intermediate step of the algorithm and is shown here to illustrate the Voronoi principle. The attribute year of for example geopoint 33 representing a point along the service pipe is thus extended to the full area of polygon O. Still performing step 80 of Figure 7, the neighbouring polygons with the same attributes are merged into a larger polygon. Thus polygons Q1 to Q5 and polygon P of Figure 5 will by the Voronoi process be merged in step 80 because they all hold the same attribute "2010". This is shown in Figure 6 where polygons Q1 to Q5 and P have merged into one single polygon T holding the attribute 2010. Polygons R and S are not merged because they have different attributes 2011 and 2013. Figure 6 shows a very characteristic polygon profile of the invention where polygons are interleaving each other while crossing the main pipe.

Correspondingly the data from the Customer data set are imported in step 83 and subjected to a Voronoi procedure and a polygon layer like shown in Figure 6 is obtained for the Customer data. In step 85 a Voronoi procedure is also made on the data from the Building register data set. Tests by the Applicant have shown that the estimated attributes can be improved and validated by using also this data set. The sequence of steps 80, 83 and 85 is not important, 85 can be made earlier than 80.

In step 89 of Figure 7 the three attribute candidates - one condidate from the Pipes data set, one from the Building register data set and one from the Customer data set - are conferred upon the service pipes that are in a polygon containing the longest line representation of a service pipe. Then a decision on the best attribute candidate of the three candidates suggested must be taken which is done in step 91. Now the service pipes have been estimated and a final step for estimating the main pipe must be performed. In step 92 a new Voronoi procedure is performed on pipes where the year of burial is known or estimated and in step 93 the final attribute year is assigned to the main pipe from the polygon which contains the longest line representation of the main pipe. In Figure 6 the year "2010" will be selected because the summed pipe lengths in polygons O and T are longer than the main pipe lengths in polygons R and S.

Although entailing numerous computer calculations, heat distribution networks with 15.000 - 20.000 users and more than 100.000 geopoints can be calculated in less than fifteen minutes.

### List of position numbers

- 1, 1': Fluid distribution network
- 2: House
- 3: District heating works
- 10: Main pipe
- 11: Main pipe
- 12: Main pipe
- 15: Interpolated geopoint on a pipe
- 13: Main pipe
- 22: Service pipe
- 23: Service pipe
- 24: Service pipe
- 25: Service pipe
- 30: Real estate box
- 31: Real estate box
- 33: Geopoint, start service pipe 22
- 35: Geopoint, end of service pipe 22
- 36: Geopoint, start of service pipe 20
- 37: Geopoint, start of main pipe 10
- 38: Geopoint, end of service pipe 20
- 39: Geopoint, end of main pipe 10
- 40: Geopoint, end of main pipe 12
- 41: Geospatial polygon around service pipe 21
- 42: Geospatial polygon around service pipe 22
- 43: Geospatial polygon around service pipe 23
- 44: Main pipe length in a geospatial polygon
- 45: Main pipe length with no attribute
- 46: Main pipe length in a geospatial polygon
- 47: Geospatial polygon around service pipe 20
- 48: Method step in the first embodiment
- 49: Geospatial polygon around service pipe 20
- 50: Method step in the first embodiment
- 53: Method step in the first embodiment
- 55: Method step in the first embodiment
- 59: Method step in the first embodiment
- 61: Method step in the first embodiment
- 63: Method step in the first embodiment
- 65: Method step in the first embodiment
- 75: Method step in the second embodiment
- 78: Method step in the second embodiment
- 80: Method step in the second embodiment
- 83: Method step in the second embodiment
- 85: Method step in the second embodiment
- 89: Method step in the second embodiment
- 91: Method step in the second embodiment
- 92: Method step in the second embodiment
- 93: Method step in the second embodiment

## Claims

1. Method for the automated estimation of an attribute of a pipe in a fluid distribution network (1), said method including retrieving a data set comprising an address of customers connected to the network (FOF) and retrieving a data set comprising the geographical location of the pipes and processing the retrieved data by using geospatial polygons
the method including these steps:
A) Assigning (53, 89) to the nearest service pipe attributes from one or both data sets, such as a year attribute
B) creating a geospatial polygon (59, 92) around each pipe which has an attribute hereby extending the attribute(s) from the pipe to the area of the polygon
C) identifying as attribute candidates the attributes from a plurality of geospatial polygons (61,89), and
D) selecting from the attribute candidates the most likely attribute and assign this most likely attribute to be the attribute of a pipe (55, 65, 91, 93).

2. Method according to claim 1 wherein the dataset comprising an address of customers further comprises an attribute with information about when a customer has been connected to the fluid distribution network.

3. Method according to claims 1 or 2 wherein the method includes retrieving a further data set comprising building register information (BBR) comprising attributes such as an address of a building and the year the building was built.

4. Method according to any of claims 1 to 3 where an assignment of the most likely attribute as the attribute to the main pipe (10) is done if at least a part of a main pipe representation is contained in a pipe polygon and if the polygon contains the longest main pipe representation or, where two or more polygons (41, 42) have the same attribute, they in summation (44+46) contain the longest main pipe representation compared to service polygons (43) with different attributes.

5. Method according to any of the proceeding claims wherein the attributes in the data sets are one or more of the following: year of pipe burial, pipe identification number, diameter of a pipe, year of house being built, year a customer was connected to the fluid distribution network.

6. Method according to any of the claims 1 to 5 wherein the selection from the attribute candidates to find the most likely attribute includes a an evaluation procedure (65) where each attribute candidate is compared to a first criterion, and if the attribute candidate does not fulfill the first criterion, to compare the attribute candidate with at least a second criterion and if the attribute candidate fulfills the first or second criteria to assign this attribute candidate as the most likely attribute to the service or main pipe.

7. Method according to claim 6 wherein the first or the at least second criterion are selected from the following criteria:
- If the main pipe is geographically close to a utility works (3) then select an attribute candidate year as the attribute of a pipe that is older than pipes remote from the main pipe
- If the year the house was built is 10 years or more later than the year the customer was connected to the fluid distribution network then select the year the house was built as the attribute of the pipe
- If the difference between the attribute containing customer's connection year to the fluid distribution network and the attribute containing the estimated year of burial of the main pipe is more than 25 years then select the attribute year of burial of the main pipe as the attribute of the pipe
and if none of these criteria are fulfilled then select the attribute from the Customer data set with information about the year the customer was connected to the fluid distribution network.

8. Method according to any of the preceding claims wherein a distance (d) from a line representing the service pipe (22) to the outline of a polygon (42) is between 5 meters and 100 meters, preferably between 20 meters and 40 meters.

9. Method according to any of claims 1 to 8 wherein the geospatial polygons are created according to a Voronoi procedure (83) and centered around geopoints from the data set comprising the address of customers (FOF) and where neighbouring polygons are merged if they hold identical attributes, such as an identical year a customer was connected to the fluid distribution network.

10. Method according to claim 9 wherein further geospatial polygons are created according to a Voronoi procedure (85) and centered around geopoints from the data set in the Building register (BBR) which comprises the address of buildings and where neighbouring polygons are merged if they hold identical attributes, such as an identical year a building was constructed.

11. Method according to claims 9 or 10 wherein further geospatial polygons are created according to a Voronoi procedure (80) and centered around geopoints from the pipes data set comprising information about the geographical location of the pipes and where neighbouring polygons are merged if they hold identical attributes, such as an identical year when a pipe was buried.

12. Method according to claim 11 wherein the pipe representations in the pipes data set are converted into geopoints, for example into a Universal Transverse Mercator (UTM) format, with a predetermined geographical distance inbetween the geopoints, such as between 1 to 10 meters, and preferredly 3 meters between two geopoints.

13. Method according to any of the preceding claims wherein the diameter of the main pipe is determined by a table look up, where the table contains the attribute representing the year that main pipes were buried in the ground of the fluid distribution network (1), the number of customers that the pipe is connected to, and the diameter of said main pipe, the method further comprising the step of selecting the diameter attribute from a main pipe with the the same year of burial, and then assigning this selected diameter attribute as the diameter of the main pipe.

14. Method according to any of the preceding claims wherein the diameter of the main pipe is determined by identifying the number of consumers in the fluid distribution network and from this number estimate the diameter of the main pipe.

15. Method according to any of the preceding claims wherein the fluid distribution network is either a heating fluid distribution network (1), a water distribution network or a sewage distribution network.
